Europäisches Patentamt

European Patent Office

Office européen des brevets

(19)

(11) **EP 1 139 471 A1**

(12) # EUROPEAN PATENT APPLICATION
published in accordance with Art. 158(3) EPC

(43) Date of publication:
04.10.2001 Bulletin 2001/40

(21) Application number: 00961082.5

(22) Date of filing: 19.09.2000

(51) Int Cl.[7]: **H01M 4/96**, C25B 11/03,
D06M 15/19, D21H 13/50,
D21H 19/10

(86) International application number:
PCT/JP00/06382

(87) International publication number:
WO 01/22509 (29.03.2001 Gazette 2001/13)

(84) Designated Contracting States:
**AT BE CH CY DE DK ES FI FR GB GR IE IT LI LU MC NL PT SE**
Designated Extension States:
**AL LT LV MK RO SI**

(30) Priority: 22.09.1999 JP 26822199

(71) Applicant: TORAY INDUSTRIES, INC.
Tokyo 103-8666 (JP)

(72) Inventors:
• INOUE, Mikio
Otsu-shi, Shiga 520-0842 (JP)
• NAKAE, Takeji
Otsu-shi, Shiga 520-2132 (JP)

(74) Representative: Weber, Joachim, Dr.
Hoefer, Schmitz, Weber & Partner
Patentanwälte
Gabriel-Max-Strasse 29
81545 München (DE)

(54) **POROUS, ELECTRICALLY CONDUCTIVE SHEET AND METHOD FOR PRODUCTION THEREOF**

(57)    A porous electrically conductive sheet, which (a) comprises a sheet composed of numerous carbon fibers being attached with an organic material, (b) has an electric resistance of 50 mΩ · cm² or less in the thickness direction of the sheet, (c) has a maximum breaking radius of 25 mm or less, and (d) has a compressibility of 40% or less. The porous electrically conductive sheet is produced by (a) a sheet forming step of forming a carbon fiber sheet by scooping numerous carbon fibers dispersed in a liquid on a net, (b) an organic material adhering step of adhering an organic material to the formed carbon fiber sheet as a binder of the carbon fibers, (c) a drying step of the sheet having the organic material adhered thereto, and (d) a pressurizing step of pressurizing the dried sheet by plane press with a face pressure of 0.49 to 9.8 MPa and/or by roll press with a clearance of 300 μm or less.

EP 1 139 471 A1

**Description**

Technical Field

The invention relates to a porous electrically conductive sheet required to have preferable fluid permeability and electric conductivity, used as an electrode substrate of a polymer electrolyte fuel cell or an electrolyzer. It also relates to a method for production thereof.

Background Art

An electrode substrate of a fuel cell or an electrolyzer is required to have the permeability of fluids participating in reaction such as hydrogen, oxygen and water, in addition to electric conductivity. Furthermore, during forming of the electrode substrate, a porous electrically conductive sheet used for constituting the substrate is required to have the strength to withstand the forming work.

As such porous electrically conductive sheet used for forming an electrode substrate, in JP 06-020710 A, JP 07-326362 A or JP 07-220735 A, a porous carbon plate comprising short carbon fibers bound with carbon is proposed.

However, such a porous carbon plate has a problem that the production cost is high, since it is produced by a method of preparing an aggregate of short carbon fibers or precursor fibers thereof, impregnating or mixing it with a resin, and baking.

Furthermore, in the case where a porous carbon plate has a low density, the binding carbon of the porous carbon plate is likely to be broken due to the pressing pressure acting when the electrode substrate is produced or assembled into an apparatus such as a battery, and moreover the porous carbon plate is easily broken due to bending deformation. Therefore, since the porous carbon plate cannot be supplied to the production line as a roll required for reducing the production cost of electrode substrates, the porous carbon plate has a problem that the working cost in the production process of electrode substrates is high.

On the other hand, in JP 07-105957 A or JP 08-007897 A, the use of a paper-like short carbon fiber aggregate as an electrode substrate is proposed. This electrode substrate has a problem that the voltage drop is large, since the electric resistance in the thickness direction is high.

As a method for improving the electric resistance in the thickness direction, WO 98 27606 discloses a method of adding an electrically conductive filler to a fiber aggregate comprising a non-woven fabric. However, if a filler and a binder for fixing the filler are added in large amounts, the fluid permeability required as an electrode substrate declines. So, there arises a problem that the supply of fuel and oxygen and the emission of the water produced by reaction cannot be sufficiently performed. A paper like short carbon fiber aggregate has a high compressibility and it has a problem that it deforms greatly on forming an electrode substrate with it or on using the formed electrode substrate in a cell. The paper like short carbon fiber aggregate has a large surface roughness and short-circuits are likely to occur through an electrolyte layer such as polymer electrolyte film, and further has a problem that the tensile strength is low.

A fiber aggregate formed like a woven fabric can also be used. However, in this case, the thickness changes greatly with pressurization, and the clearances between fiber bundles and unevenness are large. So, there arises a problem that it is difficult to carry out treatment in subsequent steps such as catalyst coating.

The invention is for solving the above-mentioned problems of the prior art. The object of the invention is to provide a porous electrically conductive sheet having low electric resistance and high fluid permeability, being able to roll up, and having little change in thickness under pressure, and also to provide a production process thereof.

Disclosure of the Invention

The porous electrically conductive sheet of the invention, which

    (a) comprises a sheet composed of numerous carbon fibers being attached with an organic material,
    (b) has an electric resistance of 50 m$\Omega \cdot$ cm$^2$ or less in the thickness direction of the sheet,
    (c) has a maximum breaking radius of 25 mm or less, and
    (d) has a compressibility of 40% or less.

The porosity in the porous electrically conductive sheet means that numerous voids (pores) allowing the materials participating in the electrode reaction such as hydrogen, oxygen and water to move are present from one surface of the sheet through the sheet to the other surface. The degree of porosity can be expressed as the density of the sheet, and the density is described later.

Electric conductivity means electron conductivity. The electrons flowing among the carbon fibers provide electric conductivity. To use the porous electrically conductive sheet of the invention as an electrode substrate, it is especially important that the electric conductivity in the thickness direction is high. To enhance the electric conductivity, it is preferable that carbon particles of, for example, carbon black, graphite or expanded graphite are present together.

The maximum breaking radius of a sheet refers to the radius of the maximum cylinder around which the sheet can be wound along the outside of the cylinder by one half without being cracked or broken in any other way.

The process for producing the porous electrically conductive sheet of the invention, which comprises,

(a) a sheet forming step of forming a carbon fiber sheet by scooping numerous carbon fibers dispersed in a liquid on a net,

(b) an organic material adhering step of adhering an organic material to the formed carbon fiber sheet as a binder of the carbon fibers,

(c) a drying step of drying the sheet having the organic material adhered thereto, and

(d) a pressurizing step of pressurizing the dried sheet by plane press with a face pressure of 0.49 to 9.8 MPa and/ or by roll press with a clearance of 300 µm or less.

Best Modes for Carrying Out the Invention

Preferable embodiments of the invention will be explained.

Carbon fibers preferably used for the porous conductive sheet of the invention are PAN (polyacrylonitrile) carbon fibers, pitch carbon fibers and phenol carbon fibers. Among them, PAN carbon fibers are especially preferable since they are unlikely to be broken when the sheet is pressurized.

If the diameter of carbon fibers is small, the fluid permeability tends to be low. In the case where the diameter of carbon fibers is large, when the porous electrically conductive sheet is coated with a catalyst layer, the permeation of the coating solution into the sheet tends to be large. For these reasons, it is preferable that the diameter of carbon fibers is in a range of 1 to 15 µm. A more preferable range is 3 to 10 µm.

The organic material used in the porous electrically conductive sheet of the invention functions to enhance the strength of the porous electrically conductive sheet and to impart water repellency to the porous electrically conductive sheet. The organic materials that can be preferably used in this case are fluorine resins, polyvinyl alcohol (PVA), polyvinyl acetate (PVAc), cellulose, acrylic resins, phenol resins, epoxy resins and polyimides.

If the amount of the organic material contained in the porous electrically conductive sheet is too large, the electric resistance increases and the fluid permeability decreases. So, it is preferable that the amount of the organic material contained in the porous electrically conductive sheet is 35 wt% or less. More preferable is 25 wt% or less.

To enhance the production efficiency in the process of producing a product using the porous electric conductive sheet, for example, an electrode substrate, it is preferable that the sheet is continuously supplied into the process. In this case, it is preferable that the sheet is wound into a roll. That is, it is preferable that the sheet can be wound into a roll without being damaged. This means that the sheet is unlikely to be broken even if it is deformed with bending.

It is preferable that the tensile strength of the sheet is 0.49 M/10 mm width or more, to prevent that the sheet is broken due to the tension in subsequent steps such as catalyst layer coating and integration with the electrolyte layer. More preferable is 1.96 N/10 mm width or more, and further more preferable is 4.9 N/10 mm width or more.

It is preferable that the numerous carbon fibers of the porous electrically conductive sheet of the invention are a non-woven fabric composed of carbon fibers. If a carbon fiber non-woven fabric is used, the sheet strength in every direction in the sheet surface can be enhanced.

The carbon fiber non-woven fabric refers to a non-woven fabric, in which carbon fibers are disposed generally at random in the sheet surface directions. Some carbon fibers may be turned in the sheet thickness direction. Disposing numerous carbon fibers in the sheet face directions is preferable for preventing short-circuits through the electrolyte layer from occurring in the case where an electrode substrate is prepared with the sheet.

The carbon fiber non-woven fabric can be produced by a method of forming carbon fibers as a non-woven fabric or a method of carbonizing a non-woven fabric of precursor fibers of carbon fibers. The methods for forming a non-woven fabric include dry methods such as carding, melt blowing, spun bonding and flushing and wet methods such as paper making technique.

Non-woven fabrics composed of oxidized acrylic fibers (flame-proof fibers, precursor of carbon fibers) are commercially available and it is possible to prepare a carbon fiber non-woven fabric by baking the commercially available product in an inactive atmosphere at a temperature of about 1,500°C. In this case, by choosing commercially available oxidized acrylic fibers, it is possible to produce a carbon fiber non-woven fabric, for example, having a unit weight of 80 g/m$^2$ and a thickness of 0.3 mm.

Though the sheet containing a woven fabric composed of carbon fibers has an enhanced strength, however the sheet has such problems that the sheet needs more carbon fibers comparing to a non-woven fabric since in the woven fabric the carbon fibers are regularly arranged and causes to raise the cost, that the clearances between fiber bundles and large roughness make the catalyst layer coating in a later step difficult, that fraying occurs at the ends of the sheet, and that the tension in an oblique direction is likely to cause mesh displacement and sheet deformation. In this regard, it can be said that a carbon fiber non-woven fabric is most preferable as the aggregate of carbon fibers forming the sheet.

The electric resistance of the porous electrically conductive sheet of the invention in the thickness direction must be 50 m$\Omega \cdot$ cm$^2$ or less, to lessen the voltage loss due to the electric resistance. More preferable is 30 m$\Omega \cdot$ cm$^2$ or less, and further more preferable is 20 m$\Omega \cdot$ cm$^2$ or less.

To measure the electric resistance, two test electrodes, each having a 50 mm wide, 200 mm long and 0.1 mm thick copper foil stuck to one side of a 50 mm wide, 200 mm long and 1.5 mm thick vitreous carbon plate having a smooth surface, are prepared. The two test electrodes are overlaid to be perpendicular to each other at the center, with the vitreous carbon plates facing each other.

The porous electrically conductive sheet, the electric resistance of which is to be measured, is cut in a circle with a diameter of 48 mm, and the cut sheet is held between the vitreous carbon plates facing each other. They are pressurized to apply a pressure of 0.98 MPa to the area of the porous electrically conductive sheet.

The ends of the two test electrodes on one side are provided with terminals for current, and the other ends on the other side are provided with terminals for voltage. Using the terminals for current, a current of 1 A is fed to flow between the two test electrodes. The voltage V (V) between the terminals for voltage is measured, and electric resistance R (m$\Omega \cdot$ cm$^2$) is calculated from the following formula. In the formula, $\pi$ is the ratio of the circumference of a circle to its diameter. The voltage is read after the voltage value is stabilized under said pressurization. The time taken till stabilization is reached is about 1 to 3 minutes.

$$R = V \times 2.4 \times 2.4 \times \pi \times 1,000$$

The maximum breaking radius of the porous electrically conductive sheet of the invention must be 25 mm or less.

The maximum breaking radius refers to the radius of the maximum cylinder around which the sheet can be wound along the outside of the cylinder by one half without being cracked or broken in any other way. If the maximum breaking radius is more than 25 mm, it is difficult to wind the sheet into a roll, and the sheet is likely to be broken in the subsequent steps. It is preferable that the maximum breaking radius is 10 mm or less.

The compressibility CR (%) of the porous electrically conductive sheet of the invention must be 40% or less, to prevent that the sheet is crushed with pressure when it is coated with a catalyst layer in a later step, not allowing uniform coating, and to prevent that the grooves of the separator functioning as the passages of fuel and air are filled with the sheet. More preferable is 20% or less, and further more preferable is 10% or less.

The compressibility CR (%) is calculated from the following formula, using the thickness T (mm) achieved when the sheet surface is pressurized at a pressure of 0.15 MPa and the thickness t (mm) achieved when the sheet surface is pressurized at a pressure of 0.024 MPa.

$$CR\ (\%) = [(t - T)/t] \times 100$$

It is preferable that pressure loss of the porous electrically conductive sheet of the invention caused when air permeates it in the thickness direction is 20 mm Aq or less. A small pressure loss means that the air permeability is high. If the pressure loss is in this range, the fluid permeability required as an electrode substrate of an electrochemical device such as a fuel cell can be satisfied. From this viewpoint, a more preferable pressure loss is 10 mm Aq, and a further more preferable pressure loss is 5 mm Aq.

It is preferable that the center line average roughness (Ra) as the surface roughness of the porous electrically conductive sheet of the invention is 30 $\mu$m or less. More preferable is 20 $\mu$m or less, and further more preferable is 10 $\mu$m or less. If the center line average roughness is too large, it is difficult to apply a catalyst uniformly, and the large roughness is likely to cause short circuits through the electrolyte layer.

The cut off value for obtaining the center line average roughness is 2.5 mm, and the measuring length is 8 mm.

The thickness of the porous electrically conductive sheet of the invention affects the fluid permeability and the electric resistance. If the thickness is too small, the fluid permeability in the face directions is not sufficient, and if too large, the increase of electric resistance is caused. These are contradictory. So, to satisfy both the properties, it is preferable that the thickness achieved with pressurization at a face pressure of 0.15 MPa is in a range of 0.13 to 0.7 mm. A more preferable range is 0.2 to 0.5 mm.

In the case where the sheet is used as an electrode of a fuel cell, it is pressurized at a pressure of about 0.3 to 3 MPa, and the thickness in this case is about 30 to 100% of that in the case of 0.15 MPa. If the thickness at 0.15 MPa is in the above range, the sheet can be good in both the fluid permeability and the electric resistance.

The density of the porous electrically conductive sheet of the invention affects the fluid permeability and the electric resistance. If the density is higher, the fluid permeability becomes lower, and if lower, the electric resistance becomes higher. These are contradictory. So, to satisfy both the properties, it is preferable that the density achieved with pressurization at a face pressure of 0.15 MPa is in a range of 0.05 to 0.6 $g/cm^3$. A more preferable range is 0.15 to 0.5 $g/cm^3$, and a further more preferable range is 0.25 to 0.4 $g/cm^3$.

In the case where the sheet is used as an electrode of a fuel cell, it is pressurized at a pressure of about 0.3 to 3 MPa, and the density in this case is 100 to 300% of that in the case of 0.15 MPa. So, if the density at 0.15 MPa is in the above range, the sheet can be good in both the fluid permeability and the electric resistance.

It is preferable that the organic material contained in the porous electrically conductive sheet of the invention contains a thermosetting resin. It can happen that the porous electrically conductive sheet is heat-treated at a temperature of 300 to 450°C for the purpose of, for example, water repellency treatment. If it contains a thermosetting resin, the mechanical strength and shape retention of the sheet can be kept even after heat treatment.

Considering the heat treatment, preferable thermosetting resins include phenol resins, epoxy resins and polyimdies.

It is preferable to heat-treat the porous electrically conductive sheet containing a thermosetting resin at a temperature 300 °C or higher for enhancing the chemicals resistance of the resin. More preferable is 400°C or higher, and further more preferable is 450°C or higher. If the heat treatment temperature is too high, the carbonization of the resin progresses, to make the sheet fragile. So, it is preferable that the heat treatment temperature is 700°C or lower. More preferable is 550°C or lower. This treatment allows organic materials low in heat resistance such as PVA, PVAc and cellulose to be removed. It is preferable to carry out the heat treatment in an inactive atmosphere for preventing the oxidative decomposition of the resin.

It is preferable to pressurize the sheet before heat treatment, for lowering the compressibility of the sheet. It is more preferable to heat simultaneously with pressurization, for partially or wholly harden the thermosetting resin.

As described above, it is preferable for lowering the electric resistance of the sheet, that the porous electrically conductive sheet contains carbon particles of carbon black, graphite or expanded graphite, etc. The carbon particles can be added when or after the sheet composed of carbon fibers is prepared.

Since carbon black enhances its adhesion to the sheet, it is preferable to mix it with the above-mentioned thermosetting resin or a resin such as a water repellent polymer described later, for letting the sheet contain carbon black.

The porous electrically conductive sheet of the invention can contain a water repellent polymeric material. The water repellent polymer is a polymer containing fluorine or a polymer containing silicon. Preferably used water repellent polymers include polytetrafluoroethylene (PTFE), tetrafluoroethylene-hexafluoropropylene copolymer (FEP), tetrafluoroethyleneperfluoroalkyl vinyl ether copolymers (PFA), fluorine-containing rubber, etc. Among them, PTFE, FEP and PFA are preferable since the water repellency and the chemicals resistance can be high, and since the water repellency can remain stable for a long period of time.

If the amount of the water repellent polymeric material is too large, the electric resistance of the sheet increases, and if too small, sufficient water repellency cannot be obtained. So, it is preferable that the amount of the water repellent polymeric material contained in the porous electrically conductive sheet is 3 to 35 wt%. A more preferable range is 8 to 25 wt%. The water repellency can be evaluated in reference to the contact angle of water. It is preferable that the contact angle is 110 degrees or more.

In a formed sheet treatment step (later step), a surface smoothening layer containing carbon fibers or carbon particles can also be formed on the surface of the porous electrically conductive sheet, for preventing the permeation of a catalyst layer when the catalyst layer is applied onto the porous electrically conductive sheet, and furthermore for preventing the short-circuits of carbon fibers through the electrolyte layer.

It is desirable that the amount of the metals (excluding precious metals such as platinum, gold, ruthenium and rhodium) contained in the porous electrically conductive sheet is smaller, since they are ionized to go into the polymer electrolyte film, for lowering the electric conductivity of the film. It is preferable that the total amount of sodium, calcium and aluminum as three typical metals contained in the porous electrically conductive sheet is 500 ppm or less. More preferable is 100 ppm or less.

It is desirable that the amount of sulfur and halogens contained in the porous electrically conductive sheet is smaller since they lower the catalytic activity. It is preferable that the total amount of chlorine as a typical halogen and sulfur contained in the porous electrically conductive sheet is 200 ppm or less. More preferable is 100 ppm or less.

The metals, halogens and sulfur can be decreased by decreasing the amounts contained in the raw materials, decreasing the amounts mixed during the process, washing the porous electrically conductive sheets with, for example, hot water, for removing them, and so on.

The porous electrically conductive sheet of the invention can be used suitably, for example, as an electrode substrate of a fuel cell.

The electrode substrate in this case means a material used as a component of an electrode, and functions to supply and emit the materials participating in the electrode reaction, to collect current, to retain the shape of the electrode and to maintain the strength of the electrode.

A catalyst layer can be formed on the porous electrically conductive sheet of the invention, to make an electrode, or furthermore, an electrolyte layer, especially a polymer electrolyte film can be formed on it, to make an electrochemical unit. The electrode and the electrochemical unit are used in a fuel cell, battery and electrolyzer.

The electrode substrate and the catalyst layer can be arranged in layers, or the electrode substrate, the catalyst layer and the polymer electrolyte film can be arranged to form a unit. A laminate containing a plurality of such units constitutes a fuel cell, and the fuel cell can be used to drive a movable body such as an automobile, ship or submarine.

In this case, the porous electrically conductive sheet is incorporated as an electrode substrate into an electrode or an electrochemical unit, and functions to allow the permeation of electrode reaction materials such as hydrogen, oxygen and water and to allow the flow of electric current. The catalyst layer is composed of a mixture consisting of a catalyst powder having fine particles of a precious metal such as platinum carried by carbon black, a polymer electrolyte and a fluorine resin, and is applied onto the electrode substrate or the polymer electrolyte film. As the polymer electrolyte film, usually a proton conductive film is often used. A fluorine resin-based film and a hydrocarbon-based film are available, and among them, a fluorine resin-based film is often used since it has high chemicals resistance.

The process for producing the porous electrically conductive sheet of the invention will be described. A case of paper-making technique as a wet method is described.

    (a) Sheet forming step (paper-like sheet forming step)

Carbon fibers each of which diameter of about 3 to 20 $\mu$ m are cut to a length of about 5 to 13 mm, and dispersed into water, and the dispersed short carbon fibers are scooped on a net, to form a sheet composed of the short carbon fibers.

    (b) Organic material adhering step

An organic material as a binder such as PVA or acrylic resin is adhered to the obtained sheet.

    (c) Drying step

The sheet adhered the organic material is dried to obtain a porous electrically conductive sheet.

As another method, when carbon fibers are dispersed into water, an organic material as a binder can be mixed, and the mixture consisting of carbon fibers and the binder can be scooped on a net and dried at a temperature of 100°C or higher for about 10 minutes, to obtain a porous electrically conductive sheet.

    (d) Pressurizing step

To lower the compressibility of the sheet, it is pressed. For pressing, the sheet is pressed at a face pressure in a range of 0.49 to 9.8 MPa. It is preferable that the face pressure is in a range of 0.98 to 4.9 MPa. If the pressing pressure is too low, the effect of lowering the compressibility of the porous electrically conductive sheet is insufficient, and if the pressing pressure is too high, the porous electrically conductive sheet is destroyed.

Pressurizing with a roll press can also be preferably used. In the case where a roll press is used, the clearance is 300 $\mu$ m or less. A preferable range of the clearance is 100 to 250 $\mu$ m. If the clearance is too small, the porous electrically conductive sheet may be destroyed, and if the clearance is too large, the effect of lowering the compressibility of the porous electrically conductive sheet is not sufficient. In the case where a roll press is used, it is preferable to achieve the predetermined clearance, with the clearance made stepwise smaller for a plurality of pressing actions, rather than achieving the predetermined clearance with one time of pressing action, since the porous electrically conductive sheet is less likely to be destroyed.

An impregnation step can be used, as required, before or after the pressurizing step, or before the heat treatment step described later.

    (e) Impregnating step

A fluorine resin such as PFA, FEP or PTFE is adhered to the obtained porous electrically conductive sheet with about 5 to 40 wt% and then the sheet is heat-treated at a temperature of 300 to 400 °C, and thus a water repellent porous electrically conductive sheet is obtained.

The process for producing a porous electrically conductive sheet containing a thermosetting resin according to the paper making technique is as follows.

    (a) Sheet forming step (paper-like sheet forming step)

Carbon fibers each of which diameter of about 3 to 20 $\mu$ m are cut to a length of about 5 to 13 mm, and dispersed into water, and the dispersed short carbon fibers are scooped on a net, to form a sheet composed of the short carbon fibers.

    (b) Organic material adhering step

An organic material as a binder such as PVA or acrylic resin is adhered to the obtained sheet.

(c) Drying step

The sheet adhered the organic material is dried to obtain a porous electrically conductive sheet.

As another method, when carbon fibers are dispersed into water, an organic material as a binder can be mixed, and the mixture consisting of carbon fibers and the binder can be scooped on a net and dried at a temperature of 100°C or higher for about 10 minutes, to obtain a porous electrically conductive sheet.

(d) Impregnating step

The obtained porous electrically conductive sheet is impregnated with a thermosetting resin solution of, for example, a phenol resin, epoxy resin or polyimide, and the solvent is removed. In this case, it is ensured that the resin is adhered by about 2.5 to 40 wt%.

(e) Pressurizing step

The porous electrically conductive sheet impregnated with the thermosetting resin is pressed. This pressing work can decrease the compressibility and the surface roughness of the porous electrically conductive sheet. In the case of pressing with a face pressure, the face pressure is in a range of 0.49 to 9.8 MPa. A preferable face pressure range is 0.98 to 4.9 MPa. If the pressing pressure is too low, the effect of lowering the compressibility of the porous electrically conductive sheet is not sufficient, and if the pressing pressure is too high, the porous electrically conductive sheet is destroyed.

Pressurizing with a roll press can also be preferably used. In the case where a roll press is used, the clearance is 300 $\mu$ m or less. A preferable range of the clearance is 100 to 250 $\mu$ m. If the clearance is too small, the porous electrically conductive sheet may be destroyed, and if the clearance is too large, the effect of lowering the compressibility of the porous electrically conductive sheet is not sufficient.

It is preferable to heat simultaneously with pressing for partially or wholly harden the thermosetting resin. If the thermosetting resin is partially or wholly hardened, the deformation of the porous electrically conductive sheet, i.e., the increase in the thickness of the sheet in subsequent steps can be inhibited.

(f) Heat treatment step

The porous conductive sheet obtained in the pressurizing step is heat-treated to perfectly harden the thermosetting resin and to enhance the chemicals resistance of the thermosetting resin.

It is preferable that the heat treatment temperature is 300°C or higher. It is preferable for reduction of production steps, to impregnate a water repellent material such as a fluorine resin into the porous electrically conductive sheet before the heat-treatment, and to heat-treat the impregnated porous electrically conductive sheet also for heat-treating the water repellent material.

In a fuel cell or an electrochemical device such as an electrolyzer, many units containing porous electrically conductive sheets are laminated. To lower the electric resistance of the laminate, it is preferable to apply a higher pressure to the laminate temporarily. It is preferable that the pressure is 1.2 to 20 times the normal pressure. A more preferable range is 1.5 to 10 times, and a further more preferable range is 2 to 5 times. If the pressure is too high, the components of the laminate are broken, and if the pressure is as low as the normal pressure, the effect of lowering the electric resistance is not sufficient. The time during which a higher pressure is applied is only required to be about 1 second to about 10 minutes.

If a higher pressure is used as the normal pressure, the electrolyte layer and the catalyst layer are likely to be deformed or broken with the lapse of time, and as a result, such problems as electric short-circuits and lower fluid diffusion capability occur. Since the temperature and the humidity are normally high, the deformation and destruction are more likely to occur. On the contrary, to use a higher pressure temporarily does not cause deformation or destruction with the lapse of time, and can achieve the purpose of lowering the electric resistance.

Example 1

Short PAN carbon fibers with a fiber diameter of 7 $\mu$m cut to a length of 12 mm were dispersed into water and scooped on a wire cloth. The sheet composed of short carbon fibers obtained like this was impregnated with an emulsion composed of a mixture consisting of PVA and PVAc (mixing ratio 1:3), and dried, to obtain a porous electrically conductive sheet.

Then, the obtained porous electrically conductive sheet was impregnated with a solution obtained by dispersing Ketjen Black powder (EC600JD produced by Lion Corp.) into water containing PVA dissolved, and dried to remove water, for obtaining a porous electrically conductive sheet. The unit weight of the obtained porous electrically conductive sheet was 42 g/m$^2$, and the Ketjen Black content was 22%, while the content of PVA and PVAc was 23%.

Comparative Example 1

The porous electrically conductive sheet obtained before being impregnated with Ketjen Black in Example 1 was used as Comparative Example 1. The unit weight of the porous electrically conductive sheet was 30 g/m$^2$, and the content of the mixture consisting of PVA and PVAc was 22%.

Comparative Example 2

A porous electrically conductive sheet was obtained as described for Comparative Example 1, except that the unit weight of the porous electrically conductive sheet was 15 g/m$^2$.

Comparative Example 3

Short PAN carbon fibers cut to a length of 12 mm and expanded graphite powder (bulk density 0.14 g/cm$^3$, average particle size about 150 µm) were mixed at a ratio by weight of 2:3, and the mixture was dispersed into water. The dispersion was scooped on a wire cloth, to form a sheet with expanded graphite powder adhered to the short carbon fibers. The sheet composed of short carbon fibers obtained like this was impregnated with an emulsion composed a mixture consisting of PVA and PVAc (mixing ratio 1:3), and dried, to obtain a porous electrically conductive sheet. The unit weight of the porous electrically conductive sheet was 56 g/m$^2$, and the content of the mixture consisting of PVA and PVAc was 10%.

Example 2

A porous electrically conductive sheet was obtained with the porous electrically conductive sheet of Comparative Example 3 pressurized at a face pressure of 2.9 MPa in the thickness direction and depressurized.

Example 3

The porous electrically conductive sheet of Comparative Example 3 was impregnated with a PFA dispersion (AD-2CR produced by Daikin Industries, Ltd.), dried, held between two graphite plates, pressurized at a face pressure of 35 g/cm$^2$ while being heat-treated at a temperature of 350°C for 1 hours, to obtain a porous electrically conductive sheet. The unit weight of the porous electrically conductive sheet was 55 g/m$^2$, and the PFA content was 11%.

Example 4

A porous electrically conductive sheet was obtained as described for Example 3, except that the porous electrically sheet obtained before being impregnated with the PFA dispersion was pressed using a roll press. The roll press was set at a linear pressure of 390 N/cm, for pressing with clearances of 350 µm, 300 µm and 250 µm respectively once and with a clearance of 200 µm twice, total five times. The unit weight of the porous electrically conductive sheet was 63 g/m$^2$, and the PFA content was 12%.

Example 5

A porous electrically conductive sheet was obtained as described for Example 3, except that pressing with a roll press was carried out after impregnation with the PFA dispersion and drying, instead of being carried out before impregnation with the PFA dispersion. The unit weight of the porous electrically conductive sheet was 61 g/m$^3$, and the PFA content was 12%.

Example 6

The porous electrically conductive sheet of Comparative Example 3 was impregnated with a resol type phenol resin methanol solution, and dried. It was ensured that the amount of the adhered phenol resin was 11% based on the weight of the porous electrically conductive sheet to be impregnated, as calculated from the solution concentration. The dried sheet was pressed at a temperature of 145°C at a face pressure of 0.98 MPa for 30 minutes. The pressed sheet was further heat-treated in air at a temperature of 400°C for 1 hour, to obtain a porous electrically conductive sheet.

Example 7

The porous electrically conductive sheet of Comparative Example 3 was impregnated with an epoxy resin methanol-acetone mixed solvent solution, and dried. It was ensured that the amount of the adhered epoxy resin was 25% based on the weight of the porous electrically conductive sheet to be impregnated, as calculated from the solution concentration. The epoxy resin methanol-acetone mixed solvent solution had a bisphenol A type liquid epoxy resin (Epikote 828 produced by Yuka Shell Epoxy K.K.), novolak type phenol resin (PSM4326 produced by Gunei Kagaku K.K.) and imdazole (Epicure EMI24 produced by Yuka Shell Epoxy K.K.) mixed and dissolved at a ratio by weight of 186:105:1. The dried sheet was pressed at a temperature of 170°C at a face pressure of 0.98 MPa. Furthermore, the pressed sheet was heat-treated in air at a temperature of 400°C for 1 hour, to obtain a porous electrically conductive sheet.

Comparative Example 4

The porous electrically conductive sheet of Comparative Example 3 was heat-treated in air at a temperature of 400°C for 30 minutes, to obtain a porous electrically conductive sheet. The unit weight was 51 g/m$^2$.

Comparative Example 5

Acetylene black powder (Denka Black powder produced by Denki Kagaku Kogyo K.K.) was dispersed into water containing PVA dissolved, and the porous electrically conductive sheet of Comparative Example 1 was impregnated with the dispersion and dried to remove water, for obtaining a porous electrically conductive sheet. The unit weight of the porous electrically conductive sheet was 55 g/m$^2$, and the acetylene black content was 41%, while the content of PVA and PVAc was 17%.

Comparative Example 6

A porous electrically conductive sheet was obtained as described for Comparative Example 5. The unit weight of the porous electrically conductive sheet was 62 g/m$^2$, and the acetylene black content was 47%, while the content of PVA and PVAc was 16%.

Comparative Example 7

Acetylene black powder was dispersed into water containing PVA dissolved. On the other hand, the porous electrically conductive sheet of Comparative Example 1 was heated at a temperature of 800°C in nitrogen atmosphere, cooled, impregnated with the dispersion, dried to remove water, and pressed using a roll press at a linear pressure of 490 N/cm with a clearance of 0, for obtaining a porous electrically conductive sheet. The unit weight of the porous electrically conductive sheet was 56 g/m$^2$, and the acetylene black content was 53%, while the PVA content was 6%.

Comparative Example 8

A porous electrically conductive sheet was obtained as described for Comparative Example 6, except that Ketjen Black powder was used instead of acetylene black powder. The unit weight of the porous electrically conductive sheet was 44 g/m$^2$, and the Ketjen Black content was 37%, while the PVA content was 12%.

Comparative Example 9

A porous electrically conductive sheet was obtained as described for Example 4, except that pressing using a roll press was carried out at a temperature of 150°C at a linear pressure of 390 N/cm with a clearance of 0. The unit weight of the porous electrically conductive sheet was 58 g/m$^2$, and the PFA content was 8%.

Comparative Example 10

The porous electrically conductive sheet of Comparative Example 1 was impregnated with a methanol solution of a mixture consisting of a novolak type phenol resin and a resol type phenol resin, and dried to have 55 parts by weight of the phenol resins adhered per 45 parts by weight of the porous electrically conductive sheet. The phenol resin-containing sheet and another identical sheet were overlaid on each other, and pressed at a temperature of 145°C at a face pressure of 0.4 MPa, to harden the phenol resins. Then, the sheet with the phenol resins hardened was heated in an inactive atmosphere at a temperature of 2,200°C, to carbonize the phenol resins, for obtaining a porous electrically conductive sheet.

Comparative Example 11

A commercially available carbon fiber woven fabric (produced by E-TEK, Inc.) was used as a porous electrically conductive sheet of Comparative Example 10. The woven fabric was called "A" cloth, and was of plain weave, having a unit weight of 116 g/m$^2$ and a thickness of 0.35 mm according to the catalogue.

The physical properties of the porous electrically conductive sheets obtained in Examples 1 through 7 and Comparative Examples 1 through 11 are shown in Table 1.

The porous electrically conductive sheets of Comparative Examples and 2 were used to prepare electrodes for fuel cells, and the electrode characteristics were measured with hydrogen supplied to the fuel electrode and air supplied to the air electrode. The results are shown in Table 2.

In the case of Comparative Example 2, though the electric resistance was low, the voltage was low and the electrode substrate composed of the porous electrically conductive sheet was thin. So, the fluid permeability in the face directions of the electrode substrate was low, and it was estimated that hydrogen and oxygen were not sufficiently supplied to the catalyst layer at the portions facing the crest portions forming the gas passages of the separator.

The influences of the electric resistance values of the porous electrically conductive sheets of Example 3 and Comparative Examples 9 and 5 on power generation efficiencies were calculated. The results are shown in Table 3. In the table, the voltage drop rate corresponds to the power generation efficiency drop rate.

As can be seen from the table, the electric resistance of a porous electrically conductive sheet directly affects the drop of power generation efficiency. Especially a drop of more than 10% in power generation efficiency is a problem.

The porous electrically conductive sheets of Example 6 and Comparative Examples 10 and 11 were used to perform the following test. Nafion 112 (produced by E.I. du Pont de Nemours & Co., Inc.) as a polymer electrolyte was held between two 1 cm x 1 cm porous electrically conductive sheets, and they were pressurized at a temperature of 110°C at a face pressure of 2.4 MPa for 10 minutes, depressurized, and cooled, and the resistance between the two porous electrically conductive sheets with the polymer electrolyte film held between them was measured using a tester. The results are shown in Table 4.

The resistance value measured using a tester should be infinite, since Nafion 112 without any electron conductivity was held between the porous electrically conductive sheets. However, when the porous electrically conductive sheets of Comparative Example 11 were used, since they were large in surface roughness, short-circuits through the polymer electrolyte film occurred to lower the electric resistance. On the contrary, it can be seen that no short-circuit occurred with the porous electrically conductive sheets of Example 6 and Comparative Example 10.

The porous electrically conductive sheets of Examples 1 through 7 are well balanced among the differential pressure with permeating air, thickness, density, electric resistance, surface roughness and tensile strength. That is, as electrode substrates, they are well balanced between the fluid permeability in the thickness direction and face directions and electric resistance, and can exhibit good cell characteristics. Since they are also low in compressibility, they can be easily coated with the catalyst layer uniformly, and the groove portions of the separator used as the passages of fuel and air are unlikely to be filled. Furthermore, they are small in the maximum breaking radius and can be wound as rolls.

From the comparison between Comparative Example 3 and Example 2, and between Comparative Examples 3 and 9 and Examples 3, 4 and 5 and Comparative Example 9, it can be seen that the pressurization of the porous electrically conductive sheet can provide the effect of lowering the compressibility.

Comparative Example 12 and Example 8

The electric resistance of the porous electrically conductive sheet of Example 5 in the thickness direction was measured at a face pressure of 0.98 MPa. This is Comparative Example 12. The porous electrically conductive sheet of Example 5 was pressurized at a face pressure of 2.9 MPa for 2 minutes, and the resistance value was measured at a lower pressure of 0.98 MPa using the same measuring instrument. This is Example 8.

Comparative Examples 13 and 14 and Example 9 and 10

Comparative Examples 13 and 14 and Examples 9 and 10 were carried out as described for Comparative Example 12 and Example 8, except that the porous electrically conductive sheets of Example 6 and Comparative Example 10 were used.

Comparative Examples 15 and 16 and Example 11

Comparative Example 15 and Example 11 were carried out as described for Comparative Example 12 and Example 8, except that the porous electrically conductive sheet of Comparative Example 9 was used. The porous electrically conductive sheet of Comparative Example 9 was pressurized at a face pressure of 0.98 MPa, and 2 hours later, the resistance value was measured using the same measuring instrument. This is Comparative Example 16.

The physical properties of the porous electrically conductive sheets obtained in Examples 8 through 11 and Comparative Examples 12 through 16 are shown in Table 5.

When the pressure acting on a laminate for resistance measurement containing a porous electrically conductive sheet and carbon plates was temporarily raised, the electric resistance could be lowered by 15 to 30%. The electric resistance lowering effect was far larger than that the temporal resistance lowering effect of Comparative Example 16.

## Table 1

| | (A)<br>Electric resistance in thickness direction<br>$(m\Omega \cdot cm^2)$ | (B)<br>Maximum breaking radius<br>(mm) | (C)<br>Compressibility<br>(%) | (D)<br>Differential pressure with air permeating at 14 cm/sec<br>(mm Aq) |
|---|---|---|---|---|
| Example 1 | 50 | 10 or less | 23 | 1.2 |
| Example 2 | 16 | 10 or less | 29 | 1.2 |
| Example 3 | 23 | 10 or less | 29 | 0.7 |
| Example 4 | 32 | 10 or less | 19 | 1.6 |
| Example 5 | 32 | 10 or less | 24 | 0.9 |
| Example 6 | 11 | 10 or less | 6 | 3.3 |
| Example 7 | 12 | 10 or less | 6 | 2.4 |
| Comparative Example 1 | 160 | 10 or less | 29 | 0.4 |
| Comparative Example 2 | 80 | 10 or less | 26 | 0.2 |
| Comparative Example 3 | 18 | 10 or less | 47 | 0.4 |
| Comparative Example 4 | 8 | * | * | * |
| Comparative Example 5 | 85 | 10 or less | 45 | 13 |
| Comparative Example 6 | 72 | 10 or less | 43 | 125 |
| Comparative Example 7 | 31 | 10 or less | 45 | 200 or more |
| Comparative Example 8 | 18 | 10 or less | 52 | 2.4 |
| Comparative Example 9 | 51 | 10 or less | 9 | 12 |
| Comparative Example 10 | 11 | 30 | 5 | 5 |
| Comparative Example 11 | 11 | 10 or less | 22 | 0.5 |

* mark in the table: Measurement could not be carried out since the strength was too low.

| | (E)<br>Surface<br>roughness<br>($\mu$m) | (F)<br>Tensile<br>strength<br>(N/10 mm width) | (G)<br>Thickness with<br>pressurization<br>at 0.15 MPa<br>(mm) | (H)<br>Density with<br>pressurization<br>at 0.15 MPa<br>(g/cm³) |
|---|---|---|---|---|
| Example 1 | 13 | 43 | 0.27 | 0.16 |
| Example 2 | 12 | - | 0.17 | 0.33 |
| Example 3 | 24 | 8 | 0.36 | 0.15 |
| Example 4 | 13 | - | 0.21 | 0.30 |
| Example 5 | 14 | 12 | 0.26 | 0.25 |
| Example 6 | 8 | 20 | 0.15 | 0.34 |
| Example 7 | 9 | 23 | 0.20 | 0.29 |
| Comparative Example 1 | 16 | 39 | 0.25 | 0.13 |
| Comparative Example 2 | 16 | 20 | 0.12 | 0.12 |
| Comparative Example 3 | 26 | 13 | 0.37 | 0.15 |
| Comparative Example 4 | * | * | * | * |
| Comparative Example 5 | - | - | 0.28 | 0.20 |
| Comparative Example 6 | - | - | 0.28 | 0.22 |
| Comparative Example 7 | - | - | 0.27 | 0.21 |
| Comparative Example 8 | - | - | 0.22 | 0.18 |
| Comparative Example 9 | - | - | 0.10 | 0.58 |
| Comparative Example 10 | 6 | 39 | 0.20 | 0.44 |
| Comparative Example 11 | 32 | - | 0.28 | 0.41 |

* mark in the table: Measurement could not be carried out since the strength was too low.

Table 2

| | Voltage at 0.6 Acm² (V) |
|---|---|
| Comparative Example 1 | 0.58 |
| Comparative Example 2 | 0.54 |

Table 3

| | Voltage loss (V) at 0.6 A/cm$^2$ (V) (with two porous electrically conductive sheets) | Voltage drop rate (%) (It is assumed that in the case where the electric resistance of the porous electrically conductive sheet is 0, the voltage is 0.7 V.) |
|---|---|---|
| Example 3 | 0.028 | 4 |
| Comparative Example 9 | 0.061 | 9 |
| Comparative Example 5 | 0.102 | 15 |

Table 4

| | Electric resistance |
|---|---|
| Example 6 | 10 MΩ or more |
| Comparative Example 10 | 10 MΩ or more |
| Comparative Example 11 | 150 Ω |

Table 5

| | Porous electrically conductive sheet | Electric resistance in thickness direction (mΩ · cm$^2$) |
|---|---|---|
| Example 8 | Example 5 | 27 |
| Comparative Example 12 | Example 5 | 32 |
| Example 9 | Example 6 | 8 |
| Comparative Example 13 | Example 6 | 11 |
| Example 10 | Comparative Example 11 | 9 |
| Comparative Example 14 | Comparative Example 11 | 12 |
| Example 11 | Comparative Example 10 | 8 |
| Comparative Example 15 | Comparative Example 10 | 11 |
| Comparative Example 16 | Comparative Example 10 | 10 |

Industrial Applicability:

The invention provides a porous electrically conductive sheet that is low in the electric resistance and high in fluid permeability, can be wound into a roll and is small in the thickness variation caused by pressurization, since the electric resistance in the thickness direction, maximum breaking radius and compressibility are in specific ranges. Since the porous electrically conductive sheet is small in the voltage drop due to electric resistance and fluid permeability and can be easily processed into an electrode, it can be preferably used for producing an electrode substrate.
According to the invention, a porous electrically conductive sheet with the above properties can be produced stably at low cost by dispersing carbon fibers into a liquid, scooping them with a wire cloth, adhering an organic material used as a binder, drying to obtain a sheet, pressurizing it in a face pressure range of 0.49 and 9.8 MPa, and/or pressing the obtained sheet with a clearance of 300 μm or less using a roll press.

**Claims**

1. A porous electrically conductive sheet, which (a) comprises a sheet composed of numerous carbon fibers being attached with an organic material, (b) has an electric resistance of 50 mΩ · cm$^2$ or less in the thickness direction of the sheet, (c) has a maximum breaking radius of 25 mm or less, and (d) has a compressibility of 40% or less.

**2.** A porous electrically conductive sheet according to claim 1, which has a pressure loss of 20 mm Aq or less.

**3.** A porous electrically conductive sheet according to claim 2, which has a surface roughness of 30 µm or less.

**4.** A porous electrically conductive sheet according to claim 3, which has a tensile strength of 0.49 N/10 mm width or more.

**5.** A porous electrically conductive sheet according to claim 4, which has a thickness of 0.13 to 0.7 mm and a density of 0.05 to 0.6 g/cm$^3$.

**6.** A porous electrically conductive sheet according to any one of claims 1 through 5, wherein the numerous carbon fibers in the sheet form a non-woven fabric.

**7.** A porous electrically conductive sheet according to any one of claims 1 through 5, wherein the organic material contains a thermosetting resin.

**8.** A porous electrically conductive sheet according to claim 6, wherein the organic material contains a thermosetting resin.

**9.** A porous electrically conductive sheet according to any one of claims 1 through 5, wherein the sheet contains carbon particles.

**10.** A porous electrically conductive sheet according to claim 6, wherein the sheet contains carbon particles.

**11.** A porous electrically conductive sheet according to any one of claims 1 through 5, wherein the sheet contains a water repellent polymeric material.

**12.** A porous electrically conductive sheet according to claim 6, wherein the sheet contains a water repellent polymeric material.

**13.** A process for producing a porous electrically conductive sheet comprises (a) a sheet forming step of forming a carbon fiber sheet by scooping numerous carbon fibers dispersed in a liquid on a net, (b) an organic material adhering step of adhering an organic material to the formed carbon fiber sheet as a binder of the carbon fibers, (c) a drying step of drying the sheet having the organic material adhered thereto, and (d) a pressurizing step of pressurizing the dried sheet by plane press with a face pressure of 0.49 to 9.8 MPa and/or by roll press with a clearance of 300 µm or less.

**14.** A process for producing a porous electrically conductive sheet according to claim 13, wherein the organic material contains a thermosetting resin.

**15.** A process for producing a porous electrically conductive sheet according to claim 13 or 14, further comprises a heat-treating step of heat-treating the sheet pressurized in the pressurizing step, at a temperature of 300°C or higher.

# INTERNATIONAL SEARCH REPORT

| International application No. |
| --- |
| PCT/JP00/06382 |

**A. CLASSIFICATION OF SUBJECT MATTER**
Int.Cl$^7$  H01M4/96, C25B11/03, D06M15/19, D21H13/50, D21H19/10

According to International Patent Classification (IPC) or to both national classification and IPC

**B. FIELDS SEARCHED**

Minimum documentation searched (classification system followed by classification symbols)
Int.Cl$^7$  H01M4/96, C25B11/03

Documentation searched other than minimum documentation to the extent that such documents are included in the fields searched
Jitsuyo Shinan Koho      1922-1996      Toroku Jitsuyo Shinan Koho  1994-2000
Kokai Jitsuyo Shinan Koho  1971-2000      Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | EP, 184638, A2 (HITACHI, LTD.), | 1,5-8,11 |
| Y | 17 October, 1985 (17.10.85), | 1-15 |
| | & JP, 61-96667, A    & JP, 61-147460 | |
| Y | US, 4759989, A (Kureha Kagaku Kogyo Kabushiki Kaisha), 17 November, 1986 (17.11.86), & JP, 62-123662 | 1-15 |
| A | JP, 10-125334, A (TOKAI CARBON CO., LTD.), 15 May, 1998 (15.05.98), Table 3 (Family: none) | 1-15 |
| A | JP, 9-278558, A (Osaka Gas Co., Ltd.), 28 October, 1997 (28.10.97), Table 1 (Family: none) | 1-15 |
| A | JP, 10-162838, A (Toray Industries, Inc.), 19 June, 1998 (19.06.98), Full text (Family: none) | 1-15 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 December, 2000 (08.12.00) | 26 December, 2000 (26.12.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)